# EUROPEAN PATENT APPLICATION

(11) **EP 4 811 719 A1**
(43) Date of publication of application: **23.09.2026**
(21) Application number: 24890076.3
(22) Date of filing: 13.06.2024
(51) Int. Cl.: H04L 9/40, H04W 12/03

(54) **INFORMATION PROCESSING METHOD, NETWORK DEVICE, AND COMPUTER-READABLE STORAGE MEDIUM**

(30) Priority: 16.11.2023 CN 202311535924
(71) Applicant: ZTE CORPORATION, Shenzhen, Guangdong 518057 (CN)
(72) Inventor: YUAN, Liquan, Shenzhen, Guangdong 518057 (CN)
(74) Representative: Vossius & Partner Patentanwälte Rechtsanwälte mbB
(86) International application number: PCT/CN2024/098824
(87) International publication number: WO 2025/102707

(57) **Abstract**

The present disclosure provides an information processing method, a network device, and a computer-readable storage medium. The information processing method is applied to a transmitting-side network device, including: encrypting, using key configuration information, a sensitive information domain in a beacon frame, to obtain an encrypted beacon frame; and transmitting the encrypted beacon frame. In an embodiment of the present disclosure, the transmitting-side network device can add protection to the sensitive information domain in the beacon frame by using the corresponding key configuration information directly. Therefore, it is only needed to encrypt, using the corresponding key configuration information, the sensitive information domain in the beacon frame, thereby preventing other network devices or third-party devices from acquiring sensitive information in the beacon frame to a certain extent, and then effectively avoiding a risk of user sensitive information leakage.

## Description

### CROSS-REFERENCE TO RELATED APPLICATION(S)

The present disclosure claims priority to Chinese patent application No. CN202311535924.7, entitled "INFORMATION PROCESSING METHOD, NETWORK DEVICE, AND COMPUTER-READABLE STORAGE MEDIUM", filed on November 16, 2023, the entire contents of which are incorporated herein by reference.

### FIELD

Embodiments of the present disclosure relate to, but are not limited to, the field of communication technology, and in particular, to information processing methods, a network device, and a computer-readable storage medium.

### BACKGROUND

At present, beacon frames that support functions of restricted target wake up time (r-TWT) and broadcast target wake up time (b-TWT) (hereinafter collectively referred to as TWT target wake up time) carry TWT grouping and service time window information by default. If a third-party device detects the TWT information in the beacon frame, it may occupy a channel within each r-TWT service time window, which causes devices with low-delay services to wait for channel access as they are unable to access channel in the corresponding TWT window in time, resulting in application-layer delay and power consumption issues, and potentially causing the risk of user privacy leakage.

### SUMMARY

The following is an overview of topics described in detail in this specification. This overview is not intended to limit the scope of protection of the claims.

Embodiments of the present disclosure provide an information processing method, a network device, and a computer-readable storage medium, which can not only prevent other network devices or third-party devices from acquiring sensitive information in a beacon frame to a certain extent, but also effectively avoid a risk of user sensitive information leakage.

In a first aspect, an embodiment of the present disclosure provides an information processing method, applied to a transmitting-side network device. The method includes: encrypting, using key configuration information, a sensitive information domain in a beacon frame, to obtain an encrypted beacon frame; and transmitting the encrypted beacon frame.

In a second aspect, an embodiment of the present disclosure further provides an information processing method, applied to a receiving-side network device. The method includes: receiving a first beacon frame transmitted by a transmitting-side network device, where the first beacon frame includes a sensitive information domain encrypted using key configuration information; decrypting, using the key configuration information, the sensitive information domain in the first beacon frame, to obtain decrypted sensitive information; and performing corresponding information processing based on the decrypted sensitive information.

In a third aspect, an embodiment of the present disclosure further provides a network device, including a memory, a processor, and a computer program stored on the memory and runnable on the processor. The processor, when executing the computer program, causes the information processing method in the first aspect or in the second aspect to be implemented.

In a fourth aspect, an embodiment of the present disclosure further provides a computer-readable storage medium, having computer-executable instructions stored therein. The computer-executable instructions are configured for performing the above-mentioned information processing methods.

### BRIEF DESCRIPTION OF THE DRAWINGS

FIG. 1 is a structural diagram of an NR according to an embodiment of the present disclosure;
FIG. 2 is a structural diagram of an MBSSID element according to an embodiment of the present disclosure;
FIG. 3 is a structural diagram of an RSNE field according to an embodiment of the present disclosure;
FIG. 4 is a format of a management frame in which BIP protection is added according to an embodiment of the present disclosure;
FIG. 5 is a flowchart of an information processing method according to an embodiment of the present disclosure;
FIG. 6 is a schematic diagram of a transmitting-side network device generating, utilizing the same key, a message integrity code and encrypted sensitive information, according to an embodiment of the present disclosure;
FIG. 7 is a structural diagram of a transmitting-side network device encrypting, utilizing a first key, sensitive information elements located at different information elements (IEs), according to an embodiment of the present disclosure;
FIG. 8 is a structural diagram of RSNE field extension according to an embodiment of the present disclosure;
FIG. 9 is a flowchart of an information processing method according to another embodiment of the present disclosure;
FIG. 10 is a structural diagram of key configuration information according to an embodiment of the present disclosure;
FIG. 11 is a flowchart of another information processing method according to an embodiment of the present disclosure;
FIG. 12 is a flowchart of information processing when a receiving-side network device is an AP or an AP MLD according to an embodiment of the present disclosure;
FIG. 13 is a structural diagram of a receiving-side network device encrypting, utilizing a second key, sensitive information elements located at different IEs, according to an embodiment of the present disclosure;
FIG. 14 is a schematic diagram of a process in which a transmitting-side network device and a receiving-side network device interact, utilizing a beacon frame, on encrypted sensitive information, according to an embodiment of the present disclosure; and
FIG. 15 is a schematic diagram of another process in which a transmitting-side network device and a receiving-side network device interact, utilizing a beacon frame, on encrypted sensitive information, according to an embodiment of the present disclosure.

### DETAILED DESCRIPTION OF EMBODIMENTS

In order to provide a clearer understanding of objectives, technical solutions, and advantages of the present disclosure, the present disclosure is further described in detail in conjunction with accompanying drawings and embodiments below. It should be understood that the specific embodiments described herein are merely used for explaining the present disclosure rather than limiting the present disclosure.

It should be noted that although functional modules are divided in a schematic diagram of an apparatus and a logical sequence is illustrated in a flowchart, in certain cases, illustrated or described operations may be performed in a way different from module division within the apparatus or in a sequence different from the sequence in the flowchart. The terms such as "first" and "second" in the specification, the claims, and the above-mentioned accompanying drawings are used for distinguishing similar objects but not necessarily used for describing particular order or sequence.

It should be noted that in a current wireless communication technology, fiber-to-the-room (FTTR) technology is to connect wireless router access points (APs) in different rooms or positions in scenarios such as homes or small and medium-sized enterprises through optical fibers, thus providing high-bandwidth and high-reliability connections between the plurality of APs. On this basis, a point-to-multipoint optical distribution network may be used to implement a connection between a master control AP and a slave AP.

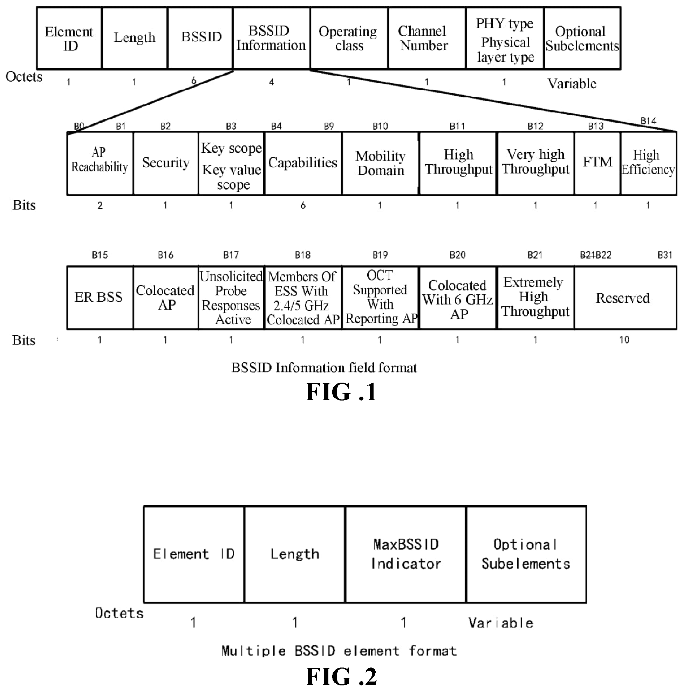

At present, a neighbour report (NR) field contains information about other surrounding access points (APs) or multi-link access points (AP MLDs, hereinafter referred to as APs for short), and is typically used when a terminal (STA) or a multi-link terminal (non-AP MLD, hereinafter referred to as STA) transmits a query frame to a target AP to query information about the other surrounding APs, and the target AP transmits a response frame to the STA to feed back the information about the other surrounding APs queried by the STA. For example, the STA transmits an access network query protocol (ANQP) query frame to the AP, and the AP feeds back an ANQP response frame to the STA. Alternatively, a beacon frame and a probe response frame transmitted by the AP carry the NR field to actively broadcast the information about the other surrounding APs. Alternatively, in scenarios involving roaming or multi-AP load balancing, the AP actively recommends the information about the other surrounding APs to the STA. The STA then acknowledges this information and transmits an (re)association request to one of recommended APs. For example, the AP transmits a BSS transition management (BTM) request frame to the STA, carrying information about the recommended APs in the NR field. The STA transmits a BTM response frame, the NR field of which carries information of an AP expected to be connected, and then transmits an authentication frame and an (re)association frame to establish a connection with the target AP. As shown in FIG. 1, FIG. 1 is a structural diagram of an NR field according to an embodiment of the present disclosure. In an NR structure, each main field is explained as follows:
Element ID: for representing an element identifier.

Length: for representing a length of an element.

BSSID: for representing a basic service set identifier (media access control (MAC) address).

BSSID Information: for representing an information field of the basic service set identifier.

Operating Class: for representing an operating channel class.

Channel Number: for representing a channel number.

PHY Type: for representing a physical layer type.

Optional Subelements: for representing optional subelements.

AP Reachability: for indicating whether a neighbour AP can be detected.

Security: for indicating whether security parameters are the same as those of a current link.

Key Scope: for indicating whether authenticator information corresponding to the current link is the same.

Capabilities: for representing capability set information of the neighbour AP.

Mobility Domain: for indicating whether a beacon frame transmitted by the neighbour AP carries a mobility domain element (MDE) field.

High Throughput: for indicating whether the neighbour AP is an HT AP, that is, whether an HT capability set is supported.

Very High Throughput: for indicating whether the neighbour AP is a VHT AP, that is, whether a VHT capability set is supported.

FTM: for indicating whether the neighbour AP supports a fine timing measurement (FTM) function.

High Efficiency: for indicating whether the neighbour AP is an HE AP, that is, whether an HE capability set is supported.

ER BSS: for indicating whether the neighbour AP is an AP supporting an extended range (ER) function.

Colocated AP: for indicating that the neighbour AP coexists with an AP corresponding to the current link on a single physical device.

Unsolicited Probe Responses Active: for indicating that the neighbour AP can transmit an unsolicited probe response frame every 20 ms on a frequency band of 6 GHz.

Members of ESS with 2.4/5GHz Colocated AP: for indicating that the neighbour AP operates on a frequency band of 2.4 GHz or 5 GHz and coexists with a current AP on a single physical device.

OCT Supported With Reporting AP: for indicating that the AP on the current link and the neighbour AP support interacting on MAC management protocol data units (MMPDUs) utilizing on-channel tunneling (OCT) technology.

Colocated With 6GHz AP: for indicating that the neighbour AP operates on the frequency band of 6 GHz and coexists with the current AP on a single physical device.

Extremely High Throughput: for indicating whether the neighbour AP is an EHT AP, that is, whether an EHT capability set is supported.

Reserved: for representing a reserved field.

Further, to reduce the channel resource overhead caused by a field length, on the basis of the NR field, a reduced neighbour report (RNR) field is clipped and modified accordingly, and only includes critical information about surrounding APs, such as information about an operating channel, an SSID, and a BSSID. When the STA receives a management frame such as a beacon frame and a probe response frame carrying the RNR field transmitted by an AP, the STA can rapidly find other surrounding APs. Subsequently, further probing is performed on a channel where the target AP is located, to acquire complete information about the AP, thereby reducing the time overhead caused when the STA blindly scans channels and probes for the surrounding APs.

Since a plurality of APs may be created on a single radio frequency link in Wi-Fi, with each AP corresponding to a different BSSID. To reduce the channel resource overhead for each AP when transmitting the beacon frame and the probe response frame, the 802.11 protocol introduces a multiple basic service set identifier (multiple BSSID, MBSSID) technology. That is, the beacon frames and the probe response frames transmitted by the plurality of APs on the same radio frequency are merged into the beacon frame and the probe response frame of a single AP to be transmitted. That is, the beacon frame and the probe response frame of one AP carry information about other APs on the same radio frequency, and the information is placed in a multiple BSSID element field, with a structure shown in FIG. 2. In this structure, each main field is explained as follows:
Element ID: for representing an element identifier.

Length: for representing a length of an element.

MaxBSSID Indicator: for indicating a maximum number indicator of basic service set identifiers (BSSIDs).

Optional Subelements: for representing optional subelements.

Detailed information of the other APs is stored within the Optional Subelements.

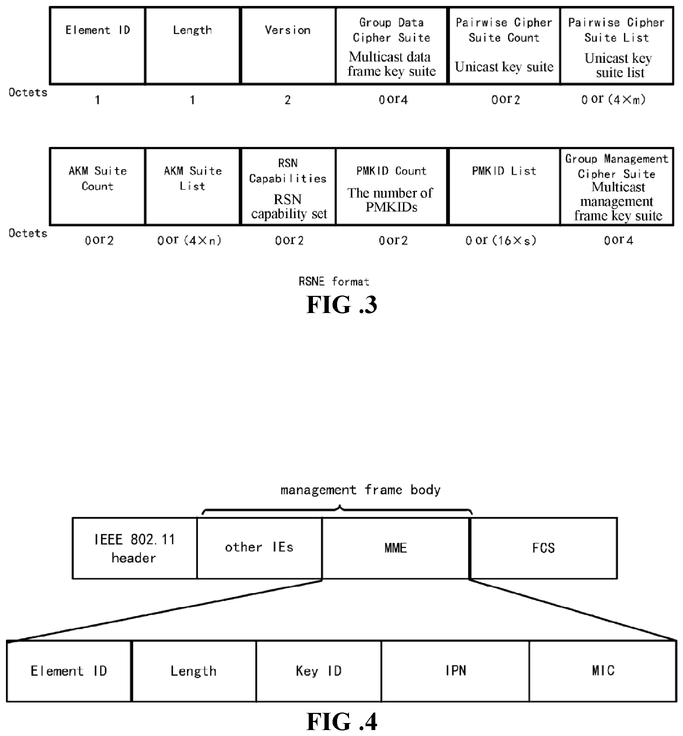

In order to enhance the data encryption and authentication performance of a wireless local area network (WLAN), institute of electrical and electronics engineers (IEEE) defines a concept of robust security network (RSN) through a new generation of security standards, and makes many improvements to defects of a WEP encryption mechanism, such as an encryption technology and a security authentication function. A robust security network element (RSN element, RSNE) is for indicating elements related to key suites and RSN capabilities carried within the RSN. As shown in FIG. 3, FIG. 3 is a structural diagram of an RSNE field according to an embodiment of the present disclosure. In an RSNE structure, each main field is explained as follows:
Element ID: for representing the uniquely identifying the element.

Length: for representing information about a length of a field.

Version: for representing RSN version information.

Group Data Cipher Suite: for representing multicast data frame key suite information.

Pairwise Cipher Suite Count: for representing the number of unicast key suites.

Pairwise Cipher Suite List: for representing a unicast key suite list.

AKM (authentication and key management) Suite Count: for representing the number of authentication and key suites.

AKM Suite List: for representing an authentication and key suite list.

RSN Capabilities: for indicating represent an RSN capability set.

PMKID Count: for representing the number of PMKIDs.

PMKID List: for representing a PMKID List.

Group Management Cipher Suite: for representing key suite information for multicast management frames.

Further, to provide data integrity and replay protection for multicast management frames and beacon frames, a broadcast/multicast integrity protocol (BIP) is defined. A basic principle is that the AP transmits an integrity group temporal key (IGTK) and a multicast frame integrity protection frame sequence number (IGTK Packet Number, IPN) for BIP protocol protection to the STA while transmitting a group temporal key (GTK) to the STA. Subsequently, the AP appends a message integrity code (MIC) value which is calculated utilizing the IGTK for the management frame, to the end of a transmitted multicast frame before transmitting the multicast frame to the STA. The STA verifies the MIC using the same IGTK. If the verification is successful, it is proved that the multicast frame is not tampered with. Similarly, for protecting the beacon frame, the AP transmits a beacon integrity group temporal key (BIGTK) and a frame sequence number (BIPN, BIGTK PN) for beacon frame integrity protection to the STA while transmitting the GTK to the STA, then the AP appends the MIC value of the management frame which is calculated by utilizing the BIGTK to the end of the transmitted multicast frame, and transmits the multicast frame to the STA. The STA verifies the MIC utilizing the same BIGTK. If the verification is successful, it is proved that the beacon frame is not tampered with. As shown in FIG. 4, which illustrates a frame format of a management frame added with BIP protection. That is, a management frame message integrity code element (Management MIC Element, MME) field containing MIC information, key suite index information (Key ID), and integrity protection frame number (IPN) information is appended to an original management frame.

On the basis of the above, in a broadcast target wakeup time (b-TWT) technology introduced by Wi-Fi 6, the AP slices a period of service time, such as a beacon period, into smaller service time slices corresponding to different b-TWT groups, and indicates service time slice information with different b-TWT group IDs, and then broadcasts the information via the beacon frame. The STA may join in one b-TWT group through a negotiation method or a non-negotiation method. When the STA needs to interact on data with the AP, the STA wakes up in a corresponding b-TWT group service time and interacts on uplink and downlink buffer data with the AP. In a non-corresponding b-TWT group service time, the STA does not need to periodically wake up to detect beacon information, nor does it need to compete for channel resources and receive the buffer data through a CSMA/CA method, so that power consumption caused by the STA periodically waking up for beacon frame detection and channel contention is reduced, and a goal of ultra-low power consumption is achieved. Further, on the basis of the b-TWT technology, Wi-Fi 7 defines a restricted target wake up time (r-TWT) technology to meet requirements of low-delay and low-power-consumption services. A basic principle is to use the b-TWT technology to slice the channel resources according to the service time, and then periodically allocate these time slices to STAs with low-delay services, and schedule service data to be transmitted in the channel to meet delay requirements of services, and the r-TWT technology incorporates protection measures at start boundaries of the time slices to prevent other devices from occupying r-TWT service time periods.

In the current wireless communication technology, a research direction of an ultra high reliability (UHR) study group (SG) established by the IEEE mainly focuses on improving transmission stability, including reducing delay, improving throughput, and reducing a packet loss rate. One method is a non-Wi-Fi signal (e.g., a bluetooth signal) interference avoidance technology. Specifically, since a non-Wi-Fi signal and a Wi-Fi signal operate on the same industrial scientific medical (ISM) band, when the two signals overlap, the two signals are bound to interfere with each other, making it extremely difficult for a receiving terminal to receive an overlapping signal and consequently leading to an increase in the packet loss rate. In order to solve the above-mentioned problems, the UHR study group studies a method to avoid non-Wi-Fi signal interference. Specifically, the STA connected to the AP informs the AP of characteristics of a non-Wi-Fi service (including start and end time, a period, etc.), and the AP broadcasts the characteristics through the beacon frame. After receiving the information, other STAs automatically avoid transmitting the Wi-Fi signal within the period of the non-Wi-Fi service, thus reducing a problem about the packet loss rate caused by mutual interference and improving the system stability.

However, different non-Wi-Fi signals have typical service characteristics. For example, a bluetooth call (based on the bluetooth connection-oriented technology, i.e., BT SCO profile) features a typical period of 3.75 ms or 7.5 ms. If a third-party device acquires this information, it may be inferred that an STA near the BSS uses a bluetooth phone according to characteristics of a bluetooth service. Apparently, using the bluetooth phone belongs to user privacy information, and broadcasting this information directly poses a risk of user privacy leakage.

Additionally, beacon frames that support functions of the r-TWT and the b-TWT (hereinafter collectively referred to as TWT target wake up time) carry TWT grouping and service time window information by default. If the third-party device detects the TWT information in the beacon frame, the third-party device may occupy a channel in each r-TWT service time window, which causes devices with low-delay services to wait for channel access as they are unable to access the channel in the corresponding TWT window in time, resulting in application-layer delay and power consumption issues, and potentially causing the risk of user privacy leakage.

To prevent other network devices or third-party devices from acquiring sensitive information in the beacon frame to a certain extent and effectively avoid a risk of user sensitive information leakage, embodiments of the present disclosure provide an information processing method, a network device, and a computer-readable storage medium. A transmitting-side network device may encrypt, by using corresponding key configuration information, a sensitive information domain in the beacon frame, to obtain a corresponding encrypted beacon frame. Subsequently, the transmitting-side network device transmits the encrypted beacon frame over a network, enabling a receiving-side network device to decrypt the sensitive information domain in the encrypted beacon frame using the corresponding key configuration information in a process of decrypting the sensitive information of the encrypted beacon frame. That is, to protect the transmission of the sensitive information in the beacon frame over the network, only the corresponding key configuration information needs to be used to encrypt the sensitive information in the beacon frame, thereby preventing, to a certain extent, the other network devices or third-party devices from acquiring the sensitive information in the beacon frame and effectively avoiding the risk of user sensitive information leakage.

Based on the above-mentioned analysis, the embodiments of the present disclosure are further described below with reference to the accompanying drawings.

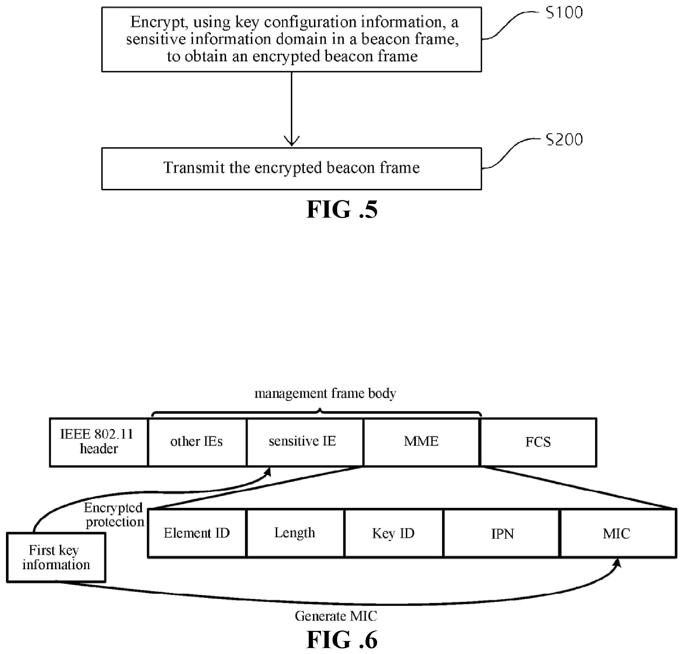

As shown in FIG. 5, FIG. 5 is a flowchart of an information processing method according to an embodiment of the present disclosure. The information processing method may be applied to the transmitting-side network device, and the information processing method may include, but is not limited to, operation S100 and operation S200.

Operation S100: Encrypt, using key configuration information, a sensitive information domain in a beacon frame, to obtain an encrypted beacon frame.

In this operation, it should be understood that the beacon frame may be a management frame transmitted periodically in the wireless local area network, and the beacon frame includes information about the network, is usually transmitted by an access point device, and may be for announcing the existence of the network.

In an embodiment, the transmitting-side network device may be an access point (AP) or a multi-link access point (AP multi-link device, AP MLD), such as a wireless router, which is not specifically limited in this embodiment.

In an embodiment, information in the sensitive information domain may include: information closely related to a non-Wi-Fi service of a user, such as a time and a period of a channel used by the non-Wi-Fi service; and information related to a Wi-Fi service of the user, such as time information of a target wake up time (TWT) of the network device.

In this embodiment, it should be understood that the channel is a transmission medium connecting the transmitting-side network device and the receiving-side network device, namely, a pathway for signal transmission. Further, in the TWT, a schedule is established between the STA and the AP, which is an agreement between the STA and the AP and is composed of TWT time periods. Typically, the TWT time period negotiated by the STA and the AP includes one or more beacon periods. After the time period negotiated between the STA and the AP arrives, the STA wakes up and waits for a trigger frame transmitted by the AP, and performs a data exchange. After the current transmission is complete, the STA returns to a sleep state. Each STA and an AP conduct an independent negotiation, and each STA has an independent TWT time period. The AP may also group the plurality of STAs according to the set TWT time periods, thereby achieving data transmission with the plurality of STAs at one time, and thus improving energy saving efficiency.

In an embodiment, when a terminal wants to establish a TWT connection, the terminal may inform the AP of energy-saving scheduling information, then the AP allocates a TWT period and feeds the period back to the terminal, and then the terminal wakes up at the designated TWT period and exchanges data frames with the AP. During this round of exchange, TWT period information may be acquired by a third-party device during transmission After the third-party device acquires the TWT period information, the third-party device may occupy a channel in each r-TWT service time window, which results in devices with low-delay services being unable to access the channel in time within corresponding TWT windows and having to wait continuously for channel access, thereby leading to delay and power consumption issues at an application layer. Therefore, by encrypting the TWT period information as the sensitive information in the beacon frame before transmission, the other network devices or third-party devices cannot decrypt the encrypted sensitive information due to the inability to acquire key information of the sensitive information domain, thereby allowing network devices containing the low-delay services to access the channel in time within the corresponding TWT windows, enhancing transmission stability and throughput while simultaneously reducing the delay and the packet loss rate.

In an embodiment, the sensitive information domain may include only a sensitive information domain of this device, or may include a first sensitive information domain of the transmitting-side network device and a second sensitive information domain of a neighbour network device. While for the second case, when encrypting the sensitive information domain in the beacon frame utilizing the key configuration information, the transmitting-side network device may encrypt, using the key configuration information, the first sensitive information and the second sensitive information domain in the beacon frame, to obtain an encrypted beacon frame.

In an embodiment, when protecting the transmission of the sensitive information in the beacon frame, the transmitting-side network device may use the corresponding key configuration information to encrypt the sensitive information domain in the beacon frame, and then transmit the encrypted beacon frame and the key configuration information. After receiving the encrypted beacon frame and the key configuration information, the receiving-side network device can directly utilize the corresponding key configuration information to decrypt the sensitive information domain in the beacon frame, thereby preventing the other network device or the third-party device from acquiring the sensitive information in the beacon frame to a certain extent, and further effectively avoiding the risk of user sensitive information leakage.

In an embodiment, the key configuration information may adopt the same frame number information, key suite information, and/or key information as the BIP technology, that is, the transmitting-side network device utilizes the key information, such as a beacon integrity group temporal key (BIGTK), to simultaneously generate a message integrity code (MIC) and encrypted sensitive information.

Referring to FIG. 6, FIG. 6 is a schematic diagram of a transmitting-side network device, generating, utilizing the same key, a message integrity code and encrypted sensitive information. A basic principle is as follows: while transmitting a group temporal key (GTK) to the STA, the AP also transmits a beacon integrity group temporal key and a frame sequence number (BIPN, BIGTK PN) to the STA, where the frame sequence number is for beacon frame integrity protection. Subsequently, the AP appends an MIC value of a management frame which is calculated by using the BIGTK to the end of a sent multicast frame, and transmits the multicast frame to the STA. The STA verifies the MIC value by utilizing the same BIGTK. If the verification is successful, it is proved that the beacon frame is not tampered with. If the verification fails, it is proved that the beacon frame is tampered with.

In an embodiment, when the beacon frame transmitted by the transmitting-side network device carries sensitive information about a neighbour AP in a neighbour report (NR), a reduced neighbour report (RNR), or multiple basic service set identifier (MBSSID) field, first key information may be used to encrypt both a first sensitive information domain of this AP and a second sensitive information domain of the neighbour AP.

The MBSSID technology can reduce the channel resource overhead of each AP transmitting the beacon frame and the probe response frame.

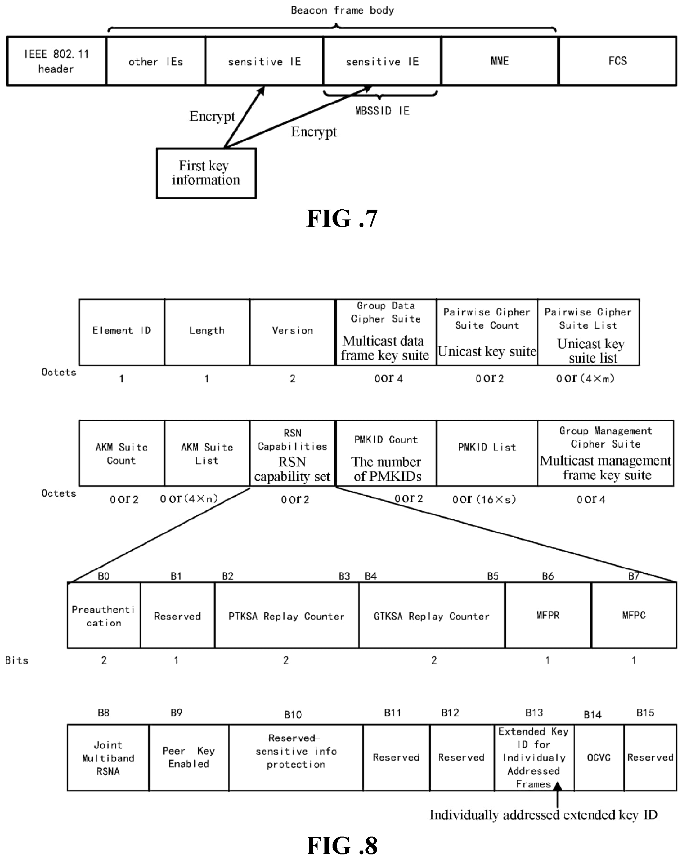

In this embodiment, referring to FIG. 7, FIG. 7 exemplarily illustrates a structural diagram about the transmitting-side network device using the same key to encrypt sensitive information elements located in different IEs. An MBSSID field in a beacon frame transmitted by the transmitting-side network device carries sensitive information about a neighbour AP. When encrypting a sensitive information domain in the beacon frame and a sensitive information domain of the neighbour AP by using first key information in key configuration information, the transmitting-side network device may use the first key information to separately encrypt the sensitive information domain in the beacon frame and the sensitive information domain of the neighbour AP.

In an embodiment, the beacon frame transmitted by the transmitting-side network device carries key suite indication information, and the key suite indication information may be for indicating key suite information selected when the sensitive information domain is encrypted, so that the receiving-side network device can indicate the decryption of the sensitive information domain by utilizing the key suite indication information carried in the beacon frame after receiving the beacon frame transmitted by the transmitting-side network device.

Operation S200: Transmit the encrypted beacon frame.

In an embodiment, by adopting the information processing method described in operation S100 above, the encrypted beacon frame includes at least the encrypted sensitive information domain, and the key suite indication information for indicating the key suite information selected when the sensitive information domain is encrypted, thereby preventing the other network devices or third-party devices from acquiring the sensitive information from the encrypted beacon frame during network transmission, and avoiding the risk of user sensitive information leakage.

In an embodiment, the encrypted beacon frame may be sent over networks including, but not limited to, the Internet, an intranet, a local area network, a mobile communication network, and a combination thereof.

In an embodiment, the STA connected to the AP may inform the AP of characteristics of a non-Wi-Fi service (including start and end time, a period, etc.) of itself, and the AP broadcasts the characteristics through the beacon frame after encryption. After receiving the information, other STAs automatically avoid transmitting the Wi-Fi signal within the period of the non-Wi-Fi service, thus reducing a problem about the packet loss rate caused by mutual interference, and improving the system stability.

In an embodiment, prior to performing operation S100, the information processing method may include, but is not limited to, the following operation S110.

S110: Interact, with the receiving-side network device via a management frame, on support capabilities of both sides for sensitive information protection.

In this operation, it should be understood that the management frame includes at least one of the following: a beacon frame, a probe request frame, a probe response frame, a multi-link probe request (ML probe request) frame, a multi-link probe response (ML probe response) frame, an association request frame, a reassociation request frame, an association response frame, a reassociation response frame, an authentication frame, and an action frame.

In an embodiment, a support capability set for sensitive information protection may be carried in the RSNE field, where the RSNE may be for indicating elements carried in the robust security network (RSN) that are related to key suites and RSN capabilities, facilitating the enhancement of data encryption and authentication performance of the WLAN.

In an embodiment, the management frame may include a robust security network element field. As shown in FIG. 8, FIG. 8 exemplarily illustrates an extended structure of the RSNE field. In a field of a set of RSN capabilities of the RSNE, a plurality of reserved bit indication bits may exist, such as a B10 flag bit, a B11 flag bit, a B12 flag bit, and a B15 flag bit shown in FIG. 8. These flag bits may be used as sensitive information protection capability indication flag bits for indicating whether sensitive information protection in the beacon frame is supported. In the case of indicating support for sensitive information protection in the beacon frame, one of the reserved flag bits may be arbitrarily selected, and then a bit of the flag bit may be set to 1. Further, if indicating no support for sensitive information protection in the beacon frame, the bit of the flag bit may be set to 0. For example, in the B10 flag bit in FIG. 8, an original reserved indicator bit is set as a sensitive information protection capability indication flag bit (Sensitive Info Protection), and when the sensitive information protection capability indication flag position is 1, it indicates that sensitive information protection in the beacon frame can be supported. When the sensitive information protection capability indication flag position is 0, it indicates that the sensitive information protection in the beacon frame is not supported.

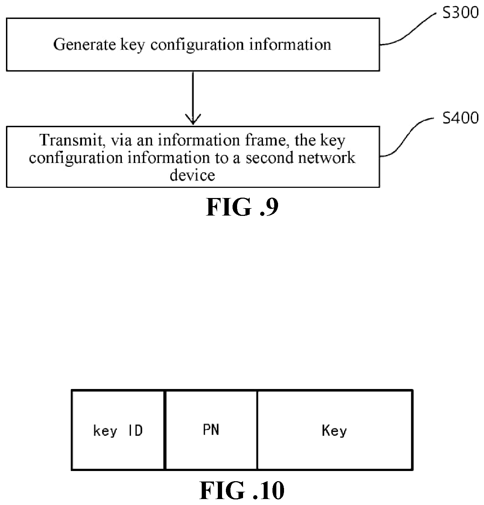

As shown in FIG. 9, FIG. 9 is a flowchart of an information processing method according to another embodiment of the present disclosure. Prior to encrypting the beacon frame in operation S100, the information processing method may include, but is not limited to, operation S300 to operation S400.

S300: Generate key configuration information.

In an embodiment, the transmitting-side network device may locally generate the key configuration information for encrypting and decrypting sensitive information in the beacon frame. The key configuration information includes key information, beacon frame number information, and key suite information. As shown in FIG. 10, FIG. 10 exemplarily illustrates a structure of the key configuration information. In this structure, each main field is explained as follows:
Key ID: for representing key suite indication information.
PN: for indicating frame number.
Key: for representing key information.

The key information may be for generating a message integrity code and to encrypt the sensitive information domain in the beacon frame.

In an embodiment, the key suite information may include at least one of the following: AES-128-CMAC, AES-128-GMAC, AES-256-CMAC, AES-256-GMAC, or SM4.

S400: Transmit, via an information frame, the key configuration information to the receiving-side network device.

In this operation, a type of the information frame may include any one of the following: an authentication frame; an EAPOL frame; or an action frame. Further, the receiving-side network device may be an access point (AP), a multi-link access point (AP multi-link device, AP MLD), a terminal (station, STA), and a multi-link terminal (non-AP MLD).

In an embodiment, the transmitting-side network device may interact on the key configuration information with the receiving-side network device via the information frame, so that the receiving-side network device acquires the corresponding key configuration information, and decrypts, using the key information in the key configuration information, the sensitive information domain in the received beacon frame to obtain decrypted information.

In an embodiment, the information processing method of the transmitting-side network device may further include: refraining from initiating contention and from utilizing channel resources within a time window for a service access channel which corresponds to sensitive information carried within the sensitive information domain.

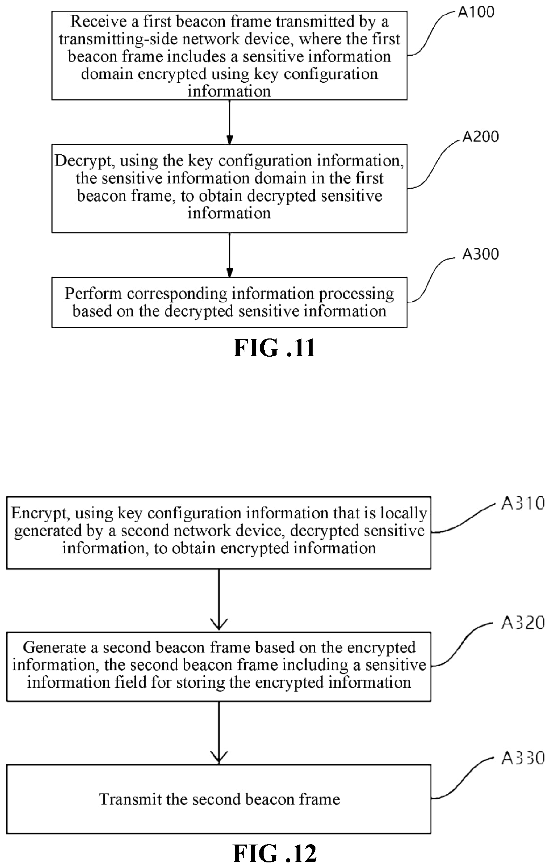

Additionally, as shown in FIG. 11, FIG. 11 is a flowchart of another information processing method according to an embodiment of the present disclosure. The information processing method may be applied to the receiving-side network device, and the information processing method may include, but is not limited to, operation A100 to operation A300.

Operation A100: Receive a first beacon frame transmitted by the transmitting-side network device, where the first beacon frame includes a sensitive information domain encrypted using key configuration information.

In an embodiment, the receiving-side network device receives the first beacon frame transmitted by the transmitting-side network device, which may carry key suite indication information, where the key suite indication information is for indicating key suite information selected when the sensitive information domain of the first beacon frame is decrypted.

It should be noted that the relevant introduction and explanation of the first beacon frame and the sensitive information domain in this embodiment are consistent with those of the beacon frame and the sensitive information in the embodiment shown in operation S100, and for the relevant introduction and explanation of the first beacon frame and the sensitive information domain in this embodiment, reference may be made to the relevant introduction and explanation of the beacon frame and the sensitive information in the embodiment shown in operation S100, which are not detailed herein.

Operation A200: Decrypt, using the key configuration information, the sensitive information domain in the first beacon frame, to obtain decrypted sensitive information.

In this operation, it should be noted that the key configuration information may include key information, number information of the beacon frame, and the key suite information, where the key information may be for verifying a message integrity code and for decrypting the sensitive information in the first beacon frame.

In an embodiment, the key configuration information may include key information for encrypting the sensitive information domain in the first beacon frame and generating the message integrity code in the first beacon frame, number information of the first beacon frame, and key suite information.

In an embodiment, after receiving the encrypted beacon frame transmitted by the transmitting-side network device, the receiving-side network device may utilize the key information from the previously received key configuration information transmitted by the transmitting-side network device to decrypt the sensitive information domain within the encrypted beacon frame and verify MIC information. If the verification is successful, it is proved that the beacon frame is not tampered with; and if the verification fails, it is proved that the beacon frame is tampered with.

In an embodiment, when the sensitive information domain in the first beacon frame includes the first sensitive information domain of the transmitting-side network device and the second sensitive information domain of the neighbour network device of the transmitting-side network device, the receiving-side network device may decrypt, utilizing the key information of the received key configuration information, the first sensitive information domain and the second sensitive information domain, to obtain the corresponding decrypted sensitive information, thereby facilitating the subsequent execution of corresponding operations based on the decrypted sensitive information.

Operation A300: Perform corresponding information processing based on the decrypted sensitive information.

In an embodiment, when the receiving-side network device is a terminal or a multi-link terminal, the receiving-side network device performing corresponding information processing, may include: refraining from initiating contention and from utilizing channel resources within a time window for a service access channel corresponding to the decrypted sensitive information.

In this embodiment, it should be understood that a network device communication may be random channel access, that is, the network device does not occupy fixed resources, and in order to arrange the use of resources between different network devices, a "contention" process is typically required for completion. The time window for the service access channel corresponding to the decrypted sensitive information refers to a period during which the channel resources are occupied by a service corresponding to the decrypted sensitive information. Based on the indication from the decrypted sensitive information, the receiving-side network device can refrain from initiating contention and from utilizing the channel resources within the time window for the service access channel corresponding to the decrypted sensitive information, thereby allowing the corresponding service to use the channel resources.

Referring to FIG. 12, FIG. 12 exemplarily illustrates a flowchart of information processing when the receiving-side network device is an AP or an AP MLD. In an embodiment, when the receiving-side network device is an access point or a multi-link access point, the corresponding information processing may include, but is not limited to, operation A310 to operation A320.

A310: Encrypt, using key configuration information that is locally generated by the receiving-side network device, the decrypted sensitive information, to obtain encrypted information.

In an embodiment, the key configuration information that is locally generated by the receiving-side network device may include second key information for encrypting a sensitive information domain in a second beacon frame and generating a message integrity code in the second beacon frame, number information of the second beacon frame, and key suite information.

In an embodiment, after decrypting, using the first key information in the received key configuration information, the sensitive information domain in the first beacon frame to obtain the decrypted information, the receiving-side network device may encrypt the obtained decrypted information again by using the second key information that is locally generated by the receiving-side network device, then copy the re-encrypted decrypted information into a field storing the sensitive information of the transmitting-side network device in the second beacon frame, and then the receiving-side network device may transmit the second beacon frame in the network.

A320: Generate the second beacon frame based on the encrypted information, the second beacon frame including a sensitive information field for storing the encrypted information.

In an embodiment, the second beacon frame stores the field of the sensitive information of the transmitting-side network device, where the field for the storing may include: an NR field, an RNR field, or an MBSSID field. The NR field, the RNR field, or the MBSSID field may be for representing that a neighbor AP contains the sensitive information, and the neighbour AP herein is the transmitting-side network device.

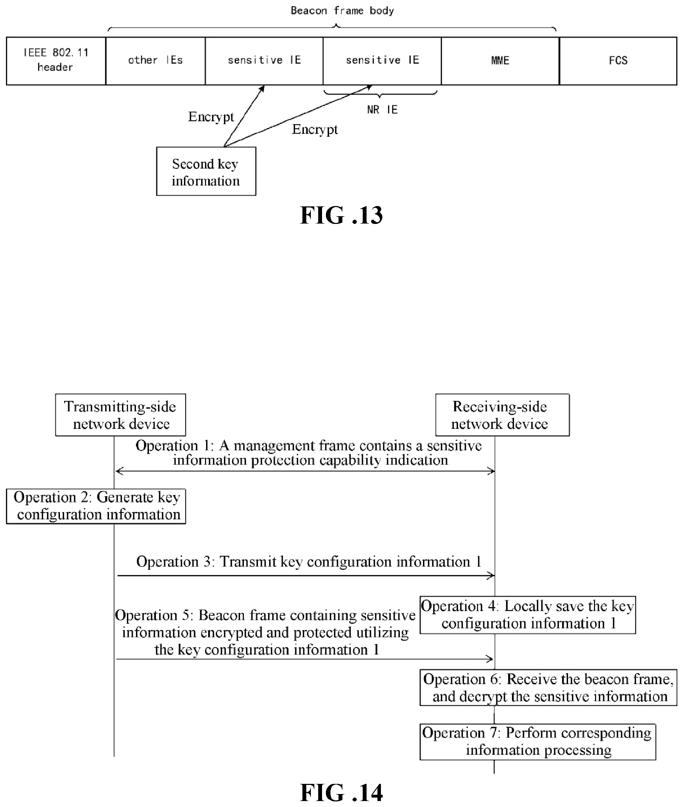

In an embodiment, referring to FIG. 13, FIG. 13 exemplarily illustrates a structural diagram about the receiving-side network device utilizing a second key to encrypt sensitive information elements located in different IEs. The NR field in the second beacon frame is for storing the sensitive information from the transmitting-side network device. When the receiving-side network device uses the key information from the key configuration information to encrypt the sensitive information domain and the sensitive information domain of the transmitting-side network device in the second beacon frame, the second key information may be used to separately encrypt the sensitive information domain and the sensitive information domain of the transmitting-side network device in the second beacon frame.

In an embodiment, when the receiving-side network device is an access point or a multi-link access point, the corresponding information processing may further include: refraining from initiating contention and from utilizing channel resources within a time window for a service access channel corresponding to the decrypted sensitive information.

In this embodiment, the beacon frame received by the receiving-side network device may support the r-TWT and b-TWT functions. In this case, the beacon frame carries the TWT grouping and service time window information by default. Based on the indication from the decrypted sensitive information, within the time window for the service access channel corresponding to the decrypted sensitive information, the receiving-side network device refrains from initiating contention and from utilizing channel resources if the receiving-side network is not a member of corresponding r-TWT and b-TWT groups, thereby allowing the corresponding service to access the channel in time within the corresponding TWT window, and thus reducing transmission delay, improving throughput, and reducing the packet loss rate.

In an embodiment, when the receiving-side network device is an access point or a multi-link access point, the corresponding information processing may include, but is not limited to, the following two cases: the receiving-side network device refrains from initiating contention and from using channel resources within the time window for the service access channel corresponding to the decrypted sensitive information; and the receiving-side network device encrypts, using the key configuration information that is locally generated, the decrypted sensitive information, to obtain the encrypted information, and then generates the second beacon frame based on the encrypted information, where the second beacon frame includes a sensitive information field for storing the encrypted information, and then transmits the second beacon frame.

It should be noted that in this embodiment, the relevant introduction and explanation of specific implementations and technical effects of the corresponding information processing are consistent with those of the information processing method described in any one of the embodiments in operations A300, A310, and A320 above. For the relevant introduction and explanation of the specific implementations and technical effects of the corresponding information processing in this embodiment, reference may be made to the relevant introduction and explanation of the specific implementations and technical effects of the information processing method described in any one of the embodiments in operations A300, A310, and A320 above, which are not detailed herein.

AS330: Transmit the second beacon frame.

In an embodiment, the information processing method including operation A310 and operation A320 above is adopted, which may cause the second beacon frame to include at least the encrypted sensitive information domain in the second beacon frame, the encrypted sensitive information domain of the transmitting-side network device, as well as key suite indication information for indicating the key suite information selected when the sensitive information domain is encrypted.

In an embodiment, the receiving-side network device may interact with a third receiving-side network device on support capabilities for sensitive information protection, and the third receiving-side network device may also receive and save second key configuration information which is transmitted by the receiving-side network device via the second information frame, so that when receiving the encrypted second beacon frame, the third receiving-side network device can decrypt and verify the encrypted sensitive information domain of the second beacon frame based on the key information in the second key configuration information, to obtain the decrypted sensitive information, and then perform subsequent information processing based on the decrypted information. Therefore, the other network devices or third-party devices can be prevented from acquiring the sensitive information in the encrypted beacon frame, and meanwhile the risk of user sensitive information leakage is effectively avoided.

In an embodiment, prior to performing operation A100, the method may further include the operation: interacting, with the transmitting-side network device via the management frame, support capabilities of both sides for sensitive information protection.

In an embodiment, the receiving-side network device interacts with the transmitting-side network device on the support capability for sensitive information protection by setting the flag bit of the robust security network element field within the management frame to 1.

It should be noted that the relevant introduction and explanation of specific implementations and technical effects of the information processing involved in this embodiment are consistent with those of the information processing method described in any one of the embodiments in operation S110 above. For the relevant introduction and explanation of the specific implementations and technical effects involved in this embodiment, reference may be made to the relevant introduction and explanation of the specific implementations and technical effects of the information processing method described in any one of the embodiments in operation S110 above, which are not detailed herein.

In an embodiment, prior to performing operation A100, the method may further include the operation: receiving the key configuration information which is transmitted by the transmitting-side network device via the information frame.

The key configuration information may include: key information for encrypting the sensitive information domain in the beacon frame and generating the message integrity code in the beacon frame, number information of the beacon frame, and key suite information.

In an embodiment, the key suite information may include at least one of the following: AES-128-CMAC, AES-128-GMAC, AES-256-CMAC, AES-256-GMAC, or SM4. Additionally, a type of the information frame may include any one of the following: an authentication frame, an EAPOL frame, or an action frame.

In an embodiment, the transmitting-side network device may transmit, in the network at any time, updated key configuration information via the information frame. When receiving the information frame, the receiving-side network device may obtain the updated key configuration information, and then replace original saved key configuration information with the updated key configuration information.

In this embodiment of the present disclosure, for the STA device connected to the AP, the STA device can obtain the sensitive information by directly decrypting the protected sensitive information domain using the corresponding key information, and can prevent the use of the same channel within an operating time period, while for other STAs or third-party devices, sensitive information related to a user service cannot be obtained due to a corresponding key being not obtained, thereby effectively avoiding the risk of user sensitive information leakage.

The information processing method provided in the above-described embodiment is described in detail below with specific examples:

### Example 1

Referring to FIG. 14, FIG. 14 is a schematic diagram of a process in which a transmitting-side network device and a receiving-side network device interact on encrypted sensitive information using a beacon frame. The transmitting-side network device shown in FIG. 14 may be an access point or a multi-link access point, and the receiving-side network device may be a terminal or a multi-link terminal. Specific examples of the interaction process are as follows:
Operation 1: The transmitting-side network device interacts, with the receiving-side network device via a management frame, on support capabilities for sensitive information protection.
Operation 2: The transmitting-side network device locally generates key configuration information 1 for encrypting and decrypting sensitive information in the beacon frame.
Operation 3: In a process of frame interaction between the transmitting-side network device and the receiving-side network device, the transmitting-side network device transmits one information frame to the receiving-side network device, and transmits the key configuration information 1 to the receiving-side network device.
Operation 4: The receiving-side network device locally saves the key configuration information 1.
Operation 5: The transmitting-side network device transmits the beacon frame in which a sensitive information domain has been encrypted using the above-mentioned key configuration information 1.
Operation 6: The receiving-side network device decrypts the sensitive information by using the above-mentioned key configuration information 1 after receiving the above-mentioned beacon frame.
Operation 7: The receiving-side network device performs corresponding information processing based on decrypted sensitive information indication.

It should be noted that the transmitting-side network device in the above-mentioned interaction process may be an AP or an AP MLD, and the receiving-side network device may be any one of an AP, an AP MLD, an STA, or a non-AP MLD.

In an embodiment, when the sensitive information domain of the beacon frame in operation (5) includes first sensitive information of the transmitting-side network device and second sensitive information of a neighbour AP, the transmitting-side network device needs to encrypt the first sensitive information and the second sensitive information by using the same key information, and when the receiving-side network device is the AP or the AP MLD, after decrypting the sensitive information domain based on the key configuration information, the receiving-side network device needs to encrypt a decrypted information domain again by utilizing second key information which is generated locally.

It should be noted that since the relevant introduction and explanation of specific implementations and technical effects involved in Example 1 include those of the information processing method described in any one of the above-mentioned embodiments, for the relevant introduction and explanation of the specific implementations and technical effects involved in Example 1, reference may be made to the information processing method described in any one of the above-mentioned embodiments, which are not detailed herein.

### Example 2

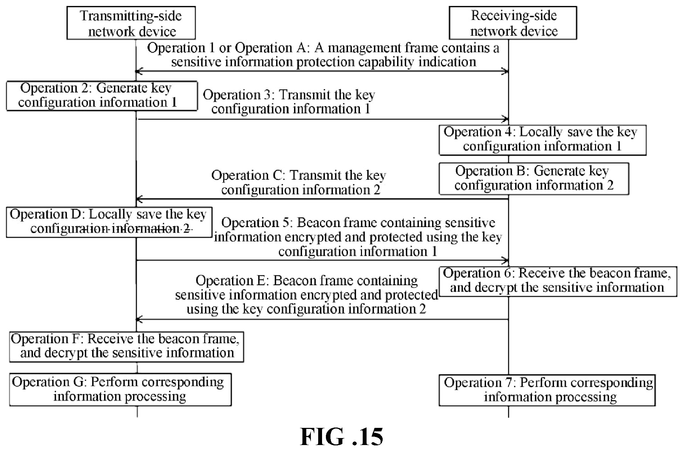

Referring to FIG. 15, FIG. 15 is a schematic diagram of another process in which a transmitting-side network device and a receiving-side network device interact on encrypted sensitive information using a beacon frame. The transmitting-side network device shown in FIG. 15 may be an access point or a multi-link access point, and the receiving-side network device may be an access point or a multi-link access point. In this case, the receiving-side network device in FIG. 15 may repeat the operations performed by the transmitting-side network device in FIG. 14, and correspondingly, the transmitting-side network device in FIG. 15 repeats the operations performed by the receiving-side network device in FIG. 14. Therefore, based on the interaction process shown in FIG. 14, the interaction process shown in FIG. 15 specifically further includes the following operations:
Operation A: The receiving-side network device interacts, with the transmitting-side network device via a management frame, on support capabilities for sensitive information protection.
Operation B: The receiving-side network device locally generates key configuration information 2 for encrypting and decrypting sensitive information in the beacon frame.
Operation C: In a process of frame interaction between the receiving-side network device and the transmitting-side network device, the receiving-side network device transmits one information frame to the transmitting-side network device, and transmits the key configuration information 2 to the transmitting-side network device.
Operation D: The transmitting-side network device locally saves the key configuration information 2.
Operation E: The receiving-side network device transmits the beacon frame in which a sensitive information domain has been encrypted by using the above-mentioned key configuration information 2.
Operation F: After receiving the above-mentioned beacon frame, the transmitting-side network device decrypts, using the above-mentioned key configuration information 2, its sensitive information .
Operation G: The transmitting-side network device performs corresponding information processing based on decrypted sensitive information indication.

It should be noted that since the relevant introduction and explanation of specific implementations and technical effects involved in Example 2 include those of the information processing method described in any one of the above-mentioned embodiments, for the relevant introduction and explanation of the specific implementations and technical effects involved in Example 2, reference may be made to the information processing method described in any one of the above-mentioned embodiments, which are not detailed herein.

The transmitting-side network device and the receiving-side network device in the present disclosure each include a memory and a processor, and the memory and the processor may be connected through a bus or other methods.

The memory, as a non-transitory computer-readable storage medium, may be for storing non-transitory software programs and non-transitory computer-executable programs. In addition, the memory may include a high-speed random access memory, and may also include a non-transitory memory, such as at least one disk storage device, flash memory, or other non-transitory solid-state storage devices. In some implementations, the memory optionally includes memories remotely disposed relative to the processor. These remote memories may be connected to the processor through a network. Examples of the above-mentioned network include, but are not limited to, an Internet, an intranet, a local area network, a mobile communication network, and a combination thereof.

Application scenarios where the transmitting-side network device and the receiving-side network device interact on the encrypted sensitive information via the beacon frame described in the embodiments of the present disclosure are intended to describe the technical solutions of the embodiments of the present disclosure more clearly, and do not constitute limitations on the technical solutions provided in the embodiments of the present disclosure. Those skilled in the art should understand that with the emergence of new application scenarios, the technical solutions provided in the embodiments of the present disclosure are equally applicable to similar technical problems.

Based on the above-mentioned information processing method, an embodiment of the present disclosure provides a network device. The network device includes: a memory, a processor, and a computer program stored on the memory and runnable on the processor.

The processor and the memory may be connected through a bus or other methods.

It should be noted that the network device in this embodiment may be applied to the transmitting-side network device, the receiving-side network device, and the third receiving-side network device in the embodiments of the present disclosure, these embodiments all belong to the same inventive concept, and therefore these embodiments have the same implementation principle and technical effects, which are not detailed herein.

The non-transitory software programs and instructions required to implement the information processing method in the above-mentioned embodiment are stored in the memory, and when the non-transitory software programs and instructions are executed by the processor, the information processing method in the above-mentioned embodiment is performed, such as performing the method operations S100 to S200 described in FIG. 5, the method operations S300 to S400 described in FIG. 9, the method operations A100 to A300 described in FIG. 11, and the method operations A310 to A330 described in FIG. 12.

The apparatus embodiments described above are merely illustrative, and units described as separate components may or may not be physically separated. That is, the units may be located in one place or may be distributed over a plurality of network units. Some or all of the modules may be selected according to actual needs to achieve the objectives of the solution of this embodiment.

In addition, based on the above-mentioned information processing method, an embodiment of the present disclosure further provides a computer-readable storage medium. The computer-readable storage medium has computer-executable instructions stored therein. The computer-executable instructions are executed by one processor or controller, for example, are executed by one processor in the above-mentioned embodiment of the network device, thereby causing the processor to perform the information processing method in the above-mentioned embodiments, such as performing the method operations S100 to S200 described in FIG. 5, the method operations S300 to S400 described in FIG. 9, the method operations A100 to A300 described in FIG. 11, and the method operations A310 to A330 described in FIG. 12.

Those of ordinary skill in the art should understand that all or some of the operations in the method disclosed above, as well as the system, may be implemented as software, firmware, hardware, and a suitable combination thereof. Some or all of the physical components may be implemented as software executed by a processor, such as a central processing unit, a digital signal processor, or a microprocessor, or may be implemented as hardware, or may be implemented as an integrated circuit, such as an application specific integrated circuit. The software may be distributed on a computer-readable medium, which may include a computer storage medium (or a non-transitory medium) and a communication medium (or a transitory medium). As is well known to those of ordinary skill in the art, the term "computer storage medium" includes volatile and non-volatile, removable and non-removable media implemented in any method or technology for storing information (e.g., a computer-readable instruction, a data structure, a program module, or other data).The computer storage medium includes, but is not limited to, a random access memory (RAM), a read only memory (ROM), an electrically erasable programmable read only memory (EEPROM), a flash memory, or other memory technologies, a CD-ROM, a digital versatile disk (DVD), or other optical disk storage, a magnetic cassette, a magnetic tape, a magnetic disk storage, or other magnetic storage apparatuses, or any other medium that may be configured to store desired information and that may be accessed by a computer. Further, as is commonly known to those of ordinary skill in the art, the communication medium typically includes a computer-readable instruction, a data structure, a program module, or other data in modulated data signals, such as carrier waves or other transmission mechanisms, and may include any information delivery medium.

The above provides specific descriptions of preferred implementations of the present disclosure, but the present disclosure is not limited to the above-mentioned implementations. Those skilled in the art may also make various equivalent transformations or substitutions without departing from the spirit of the present disclosure, and these equivalent transformations or substitutions all fall within the scope defined by the claims of the present disclosure.

## Claims

1. A method of information processing, applied to a transmitting-side network device, the method comprising:
encrypting, using key configuration information, a sensitive information domain in a beacon frame, to obtain an encrypted beacon frame; and
transmitting the encrypted beacon frame.

2. The method of claim 1, wherein prior to encrypting, using key configuration information, a sensitive information domain in a beacon frame, the method further comprises:
interacting, with a receiving-side network device via a management frame, on support capabilities of both sides for sensitive information protection.

3. The method of claim 2, wherein the management frame comprises a robust security network element field, the robust security network element field comprises a sensitive information protection capability indication flag bit, and the sensitive information protection capability indication flag bit is for indicating whether a protection of the sensitive information domain of the beacon frame is supported.

4. The method of claim 3, wherein the management frame comprises one of the following:
a beacon frame;
a probe request frame;
a probe response frame;
a multi-link probe request frame;
a multi-link probe response frame;
an association request frame;
a reassociation request frame;
an association response frame;
a reassociation response frame;
an authentication frame; or
an action frame.

5. The method of claim 1, wherein prior to encrypting, using key configuration information, a sensitive information domain in a beacon frame, the method further comprises:
generating the key configuration information; and
transmitting, via an information frame, the key configuration information to a receiving-side network device.

6. The method of claim 5, wherein the key configuration information comprises key information, beacon frame number information, and key suite information.

7. The method of claim 6, wherein
the key information is for generating a message integrity code and for encrypting the sensitive information domain in the beacon frame.

8. The method of claim 6, wherein the beacon frame comprises key suite indication information, and the key suite indication information is for indicating the key suite information selected when the sensitive information domain is encrypted.

9. The method of claim 5, wherein the information frame comprises one of the following:
an authentication frame;
an EAPOL frame; or
an action frame.

10. The method of claim 1, wherein the sensitive information domain comprises a first sensitive information domain of the transmitting-side network device and a second sensitive information domain of a neighbor network device; and
encrypting, using key configuration information, a sensitive information domain in a beacon frame, to obtain an encrypted beacon frame comprises:
encrypting, using the key configuration information, the first sensitive information domain in the beacon frame, and encrypting, using the key configuration information, the second sensitive information domain in the beacon frame, to obtain the encrypted beacon frame.

11. The method of claim 1, the method further comprising:
refraining from initiating contention and from utilizing channel resources within a time window for a service access channel corresponding to sensitive information carried within the sensitive information domain.

12. A method of information processing, applied to a receiving-side network device, the method comprising:
receiving a first beacon frame transmitted by a transmitting-side network device, wherein the first beacon frame comprises a sensitive information domain encrypted using key configuration information;
decrypting, using the key configuration information, the sensitive information domain in the first beacon frame, to obtain decrypted sensitive information; and
performing corresponding information processing based on the decrypted sensitive information.

13. The method of claim 12, wherein prior to the receiving a first beacon frame transmitted by a transmitting-side network device, the method further comprises:
interacting, with the transmitting-side network device via a management frame, on support capabilities of both sides for sensitive information protection.

14. The method of claim 13, wherein the management frame comprises a robust security network element field, the robust security network element field comprises a sensitive information protection capability indication flag bit, and the sensitive information protection capability indication flag bit is for indicating whether a protection of the sensitive information domain of the first beacon frame is supported.

15. The method of claim 14, wherein the management frame comprises one of the following:
a beacon frame;
a probe request frame;
a probe response frame;
a multi-link probe request frame;
a multi-link probe response frame;
an association request frame;
a reassociation request frame;
an association response frame;
a reassociation response frame;
an authentication frame; or
an action frame.

16. The method of claim 12, wherein prior to the receiving a first beacon frame transmitted by a transmitting-side network device, the method further comprises:
receiving the key configuration information which is transmitted by the transmitting-side network device via an information frame.

17. The method of claim 16, wherein the key configuration information comprises key information, beacon frame number information, and key suite information.

18. The method of claim 17, wherein the key information is for verifying a message integrity code and decrypting the sensitive information domain in the first beacon frame.

19. The method of claim 17, wherein the first beacon frame comprises key suite indication information, and the key suite indication information is for indicating the key suite information selected when the sensitive information domain is decrypted.

20. The method of claim 16, wherein the information frame comprises one of the following:
an authentication frame;
an EAPOL frame; or
an action frame.

21. The method of claim 12, wherein the sensitive information domain comprises a first sensitive information domain of the transmitting-side network device and a second sensitive information domain of a neighbor network device; and
the decrypting, using the key configuration information, the sensitive information domain in the first beacon frame, to obtain decrypted sensitive information comprises:
decrypting, using the key configuration information, the first sensitive information domain in the first beacon frame, and decrypting, using the key configuration information, the second sensitive information domain in the first beacon frame, to obtain the decrypted beacon frame.

22. The method of claim 12, wherein the receiving-side network device is a terminal device, and the performing corresponding information processing based on the decrypted sensitive information comprises:
refraining from initiating contention and from utilizing channel resources within a time window for a service access channel corresponding to the decrypted sensitive information.

23. The method of claim 12, wherein the receiving-side network device is an access point device, and the performing corresponding information processing based on the decrypted sensitive information comprises at least one of the following:
refraining from initiating contention and from utilizing channel resources within a time window for a service access channel corresponding to the decrypted sensitive information; or
encrypting, using key configuration information that is generated locally, the decrypted sensitive information, to obtain encrypted information;
generating a second beacon frame based on the encrypted information, the second beacon frame comprising a sensitive information field for storing the encrypted information; and
transmitting the second beacon frame.

24. A network device, comprising a memory, a processor, and a computer program stored on the memory and runnable on the processor, the processor, when executing the computer program, causing the information processing method of any one of claims 1 to 23 to be implemented.

25. A computer-readable storage medium, having computer-executable instructions stored therein, the computer-executable instructions being configured for performing the information processing method of any one of claims 1 to 23.
